# EUROPÄISCHE PATENTSCHRIFT

(11) **EP 0 697 354 B1**
(45) Veröffentlichungstag und Bekanntmachung des Hinweises auf die Patenterteilung: **25.11.1998**
(21) Anmeldenummer: 95890118.3
(22) Anmeldetag: 26.06.1995
(51) Int. Cl.: B65G 51/06, B65G 51/26

(54) **Hülse für eine Rohrpostanlage sowie Laderohr für eine Rohrpoststation**
Carrier for a tube mail system and loading tube for a station belonging to that system
Cartouche pour un système de courrier par tube et tube de chargement pour une station de ce système

(30) Priorität: 19.07.1994 AT 1421/94
(43) Veröffentlichungstag der Anmeldung: 21.02.1996
(73) Patentinhaber: Sumetzberger, Walter, A-1110 Wien (AT)
(72) Erfinder: Luger, Michael, A-2214 Auersthal (AT)
(74) Vertreter: Müllner, Erwin, Dr.

(56) Entgegenhaltungen:
- EP-A- 0 508 048
- DE-A- 4 139 396
- GB-A- 2 024 134
- US-A- 3 655 146
- US-A- 4 820 086

## Beschreibung

Die vorliegende Erfindung betrifft eine Hülse für eine Rohrpostanlage, die durch einen Boden und einen Deckel verschließbar ist, wobei der Deckel aus mehreren Deckelsektoren gebildet ist und jeder dieser Deckelsektoren um eine eigene, jeweils tangential zur Hülse und normal zur Hülsenlängsachse liegende Drehachse schwenkbar gelagert ist und wobei ein Betätigungsring parallel zur Hülsenlängsachse verschiebbar um die Hülse herum angeordnet ist. Sie betrifft auch ein Laderohr für eine Rohrpoststation für eine derartige Hülse.

Derartige Hülsen für Rohrpostanlagen sind seit langer Zeit bekannt. Im allgemeinen wird der Deckel händisch geöffnet, die Hülse mit dem zu befördernden Gut beladen und anschließend der Deckel wieder händisch geschlossen. Anschließend wird die Hülse verschickt. Bei den bekannten Hülsen ist der Deckel oft aufgeschraubt. Aus der GB-A-2 024 134 und aus der US-A-3 655 146 sind Hülsen bekannt, bei welchen der Deckel des zylindrischen Behälters um eine tangential und außerhalb des Mantels liegende sowie normal zur Zylinderachse stehende Achse schwenkbar ist.

Nachteilig bei derartigen Hülsen ist, daß sie händisch geöffnet und verschlossen werden müssen, sodaß sie sich z.B. nicht für ein automatisches Lager eignen.

Es ist auch schon eine Rohrpostanlage bekannt, die für Autoschalter von Banken bestimmt ist und bei der der Deckel automatisch abgenommen wird, wenn die Hülse in der Rohrpoststation in die Entnahmestellung gebracht wird. Bei diesem System wird der Deckel in der Rohrpoststation automatisch vollständig abgenommen, danach kann die Hülse entnommen werden. Der Deckel bleibt dabei in der Rohrpoststation.

Nachteilig ist bei diesem System, daß zum Abnehmen des Deckels ein großer technischer Aufwand in der Rohrpoststation notwendig ist. Außerdem ist es ungünstig, daß Deckel und Hülse voneinander getrennt werden. Es ist dadurch leicht möglich, daß der Deckel in der Rohrpoststation verlorengeht. Außerdem muß immer zunächst die entnommene Hülse wieder in die Rohrpoststation eingesetzt und abgeschickt werden, bevor eine weitere Hülse ankommen kann, weil in der Rohrpoststation nur Platz für einen Deckel vorgesehen ist.

Eine Hülse der eingangs genannten Art ist aus der EP-B-508 048 bekannt. Der Deckel besteht aus zwei Deckelsektoren. Beide Deckelsektoren sind um jeweils eine eigene Drehachse in eine Offenstellung schwenkbar. Beide Drehachsen liegen tangential zur Hülse und normal zur Hülsenlängsachse, aber innerhalb der Außenkontur der Hülse. Es ist ein Betätigungsring um die Hülse herum angeordnet. Er ist parallel zur Hülsenlängsachse verschiebbar. An ihm sind zwei Riegel angebracht, die sich in Richtung Deckel erstrecken. Jeder Riegel kann einen Deckelsektor in der Schließstellung verriegeln. Wenn der Betätigungsring in Richtung Boden verschoben wird, werden die beiden Riegel von Deckel weggezogen, sodaß die beiden Deckelsektoren geöffnet werden können. Wenn die Hülse mit dem Deckel nach unten in der Rohrpoststation ankommt, öffnet der Deckel infolge der Schwerkraft automatisch. Durch Zurückschieben des Betätigungsringes in die ursprüngliche Lage werden die beiden Deckelsektoren geschlossen und verriegelt. Zum automatischen Verschieben des Betätigungsringes in einer Rohrpoststation ist eine Nut im Betätigungsring vorgesehen.

Nachteilig ist bei dieser Konstruktion, daß die Hülse nur dann automatisch öffnet, wenn sie sich mit dem Deckel nach unten in der Rohrpoststation befindet. Der Inhalt fällt dann heraus. Weiters ist nachteilig, daß die Deckelsektoren relativ viel Platz beim Ausschwenken in axialer Richtung benötigen (etwa den Radius der Hülse). Wenn die Hülse mit dem Deckel nach oben ankommt, ist es daher (abgesehen von der Notwendigkeit des händischen Öffnens) schwierig, den Inhalt aus der Hülse zu nehmen, weil diese praktisch um den Radius länger erscheint als sie tatsächlich ist und man daher sehr tief hineingreifen muß.

Es ist Aufgabe der vorliegenden Erfindung, eine Hülse der eingangs genannten Art so zu verbessern, daß die Hülse in jeder Lage in der Rohrpoststation automatisch öffnet und schließt, sodaß sie sich zum automatischen Beladen und Entladen eignet und daß die Deckelsektoren in der Offenstellung die Hülse nicht oder nur unwesentlich in axialer Richtung überragen.

Diese Aufgabe wird durch eine Hülse der eingangs genannten Art erfindungsgemäß dadurch gelöst, daß jede Drehachse in geometrischer Hinsicht außerhalb der Hülse liegt und mittels des vorzugsweise einen nach außen ragenden Vorsprung aufweisenden Betätigungsringes parallel zur Hülsenlängsachse verschiebbar ist und daß in Schließstellung des Deckels der Außendurchmesser des Deckels in Richtung Boden von einem ersten Wert bis zu einem Maximalwert kontinuierlich zunimmt.

Die erfindungsgemäße Hülse wird geöffnet, indem ein Betätigungsring parallel zur Hülsenlängsachse und vom Deckel weg verschoben wird. Durch die Verschiebung des Betätigungsringes werden auch die Drehachsen der Deckelsektoren verschoben, wodurch die Deckelsektoren, die ja mit ihrer Innenseite am Ende der Hülse anliegen, in die Öffnungsstellung gezwungen werden. Vorteilhaft ist dabei, daß die Deckelsektoren durch die Verschiebung der Drehachsen außen an der Hülse vorbeigleiten, sodaß in der Entnahmestellung der Hülsenrand nicht oder jedenfalls nicht stark von den Deckelsektoren überragt wird. Der Inhalt der Hülse ist auf diese Weise sehr leicht zugänglich. Von besonderem Vorteil ist aber, daß die erfindungsgemäße Hülse sehr einfach automatisch und in jeder Lage in einer Rohrpoststation geöffnet werden kann. Wie weiter unten beschrieben wird, ist es möglich, die Hülse selbstöffnend oder selbstschließend auszubilden. Wenn sie selbstöffnend ist, können sogar herkömmliche Rohrpoststationen eingesetzt werden, sofern genügend Zeit zur Verfügung steht, in der sich die Hülse automatisch öffnet, und genügend Platz für die Deckelsektoren in der Öffnungsstellung vorhanden ist. Anderenfalls ist es lediglich notwendig, daß sich das Laderohr der Rohrpoststation erfindungsgemäß in Richtung offenes Ende erweitert und daß in den nicht erweiterten Teil des Laderohres seitlich Greifer für den Betätigungsring ragen, wobei die Greifer durch den Deckel der Hülse gegen Federkraft nach außen drückbar sind.

Wenn die Hülse in der Rohrpoststation in das Laderohr gelangt und dort in die Entnahmestation gebracht wird, kommen die Greifer des Laderohres in Eingriff mit dem Vorsprung des Betätigungsringes und ziehen diesen entlang der Hülsenlängsachse in Richtung vom Deckel weg, wodurch sich die Deckelsektoren öffnen. Damit der Deckel samt Dichtring beim Einfahren in das Laderohr an den Greifern vorbeikommt, ist vorgesehen, daß sich die Greifer gegen Federkraft nach außen drücken lassen und daß der Außendurchmesser des Deckels in Richtung von einem ersten Wert bis zu einem Maximalwert kontinuierlich zunimmt. Wenn die Hülse in die Entnahmestellung geschoben wird, werden die Greifer in dem Maße, wie der Außendurchmesser des Deckels zunimmt, nach außen gedrückt. Wenn der Dichtring des Deckels, der den größten Durchmesser hat, an den Greifern vorbeigekommen ist, gelangen diese infolge der Federkraft wieder in ihre Normalstellung. Wenn während des weiteren Transportes der Hülse in Richtung Entnahmestellung der Vorsprung des Betätigungsringes an den Greifern anliegt, so kann er - da er etwa radial nach außen ragt - die Greifer nicht nach außen drücken und wird daher von den Greifern zurückgehalten. In dem Maße, in dem die Hülse weitertransportiert wird, öffnet sich dann der Deckel.

Besonders vorteilhaft ist bei der erfindungsgemäßen Hülse auch, daß das Öffnen des Deckels mit einer Vergrößerung des Außendurchmessers der Hülse verbunden ist, sodaß ein Öffnen innerhalb eines Rohres der Rohrpostanlage allein aus geometrischen Gründen unmöglich ist.

Bei der einfachsten Ausführungsform der erfindungsgemäßen Hülse sind die Drehachsen direkt auf dem Betätigungsring befestigt. Auf diese Weise kommt man mit einer minimalen Anzahl von Bauelementen aus.

Gemäß einer anderen Ausführungsform ist vorgesehen, daß die Drehachsen auf einem Lagerring befestigt sind, der um die Hülse herum angeordnet ist, und daß der Betätigungsring mit jedem Dekkelsektor über Kipphebel verbunden ist, wobei jeder Kipphebel mit einem Ende am jeweiligen Deckelsektor und mit dem anderen Ende am Betätigungsring angelenkt ist. Bei dieser Ausführungsform erfolgt das Öffnen des Deckels also über eigene Kipphebel, die entsprechend reibungsarm gelagert werden können, sodaß das Öffnen des Deckels entsprechend leichtgängig erfolgen kann. Ohne diese Kipphebel würden die Deckelsektoren während der Öffnung des Deckels direkt am Hülsenrand gleiten, was mit relativ viel Reibung verbunden wäre.

Es ist bei dieser Ausführungsform zweckmäßig, wenn der Betätigungsring in Richtung Deckel durch eine Feder vorgespannt ist. In diesem Fall wird der Deckel infolge der Feder automatisch geschlossen, wenn sich die Hülse außerhalb der Rohrpostanlage befindet. Ohne diese Feder wäre die Hülse - wenn sie sich nicht in der Rohrpostanlage befindet - immer geöffnet, sodaß sie nicht geeignet wäre, Gegenstände außerhalb der Rohrpostanlage zu verwahren.

Es ist darüber hinaus günstig, wenn der Anlenkpunkt jedes Kipphebels am Betätigungsring in Richtung der Hülsenlängsachse verschiebbar ist und wenn - wie aus der EP-B-508 048 bekannt - der Betätigungsring einen Fortsatz aufweist, mit der er - wenn er sich in der nächstmöglichen Lage zum Deckel befindet - die Dekkelsektoren teilweise umgreift. In diesem Fall wird der Betätigungsring - nachdem er infolge der Feder den Deckel geschlossen hat - durch die Feder noch weiter verschoben, bis er die Dekkelsektoren teilweise umgreift. In dieser Lage des Betätigungsringes können die Deckelsektoren dann nicht mehr gekippt werden, sodaß der Deckel in der Geschlossenstellung fixiert ist. Bei einer derartigen Hülse schließt der Deckel praktisch dicht ab, sodaß sich diese Hülse auch zum Transport von Granulat eignet. Damit diese bekannte Konstruktion zusammen mit den zum automatischen Öffnen notwendigen Kipphebeln verwendbar ist, ist es notwendig, daß der Anlenkpunkt jedes Kipphebels am Betätigungsring in Richtung der Hülsenlängsachse verschiebbar ist. Auf diese Weise wirken die Kipphebel nur beim Öffnen, nicht jedoch beim Schließen.

Gemäß einer Ausgestaltung der Erfindung ist vorgesehen, daß die Deckelsektoren um ihre Drehachse nach außen vorgespannt sind. Diese Vorspannung erfolgt am einfachsten durch kleine Federn um die Drehachsen. Diese Vorspannung erleichtert das Öffnen des Deckels. Sie ist insbesondere dann notwendig, wenn die Reibungskräfte des Mechanismus so hoch sind, daß er ohne die Vorspannung selbsthemmend wäre.

Vorzugsweise sind drei Deckelsektoren vorgesehen. Dies ist ein guter Kompromiß zwischen der Durchmesservergrößerung der Hülse beim Öffnen des Deckels und dem mechanischen Aufwand.

Schließlich ist besonders für automatisches Beladen günstig, wenn bei geöffnetem Deckel die Deckelsektoren von der Hülse axial überragt werden, weil auf diese Weise eine dichte Verbindung zwischen Hülse und Befüllvorrichtung herstellbar ist, was insbesondere bei Granulat u.dgl. wichtig ist.

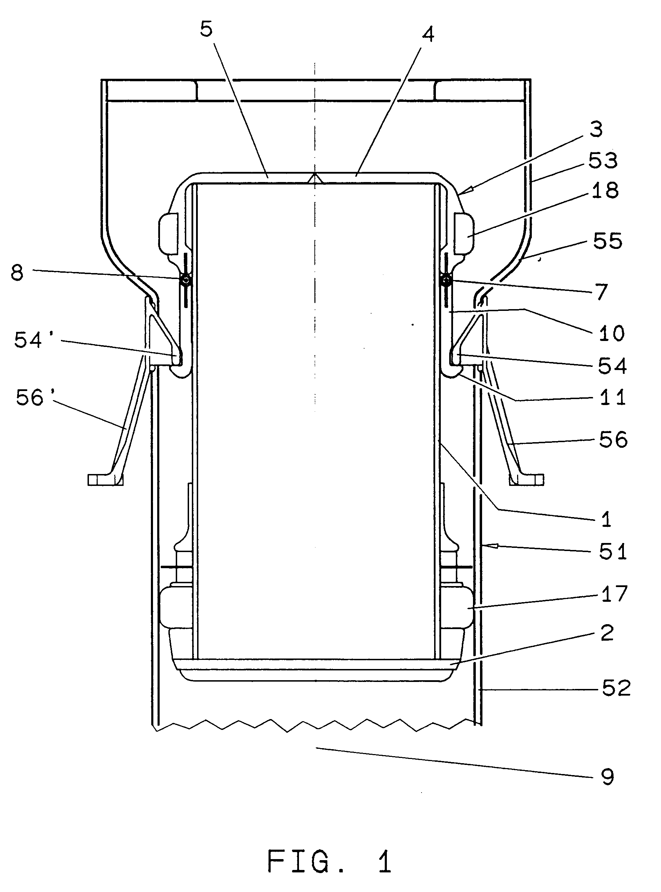

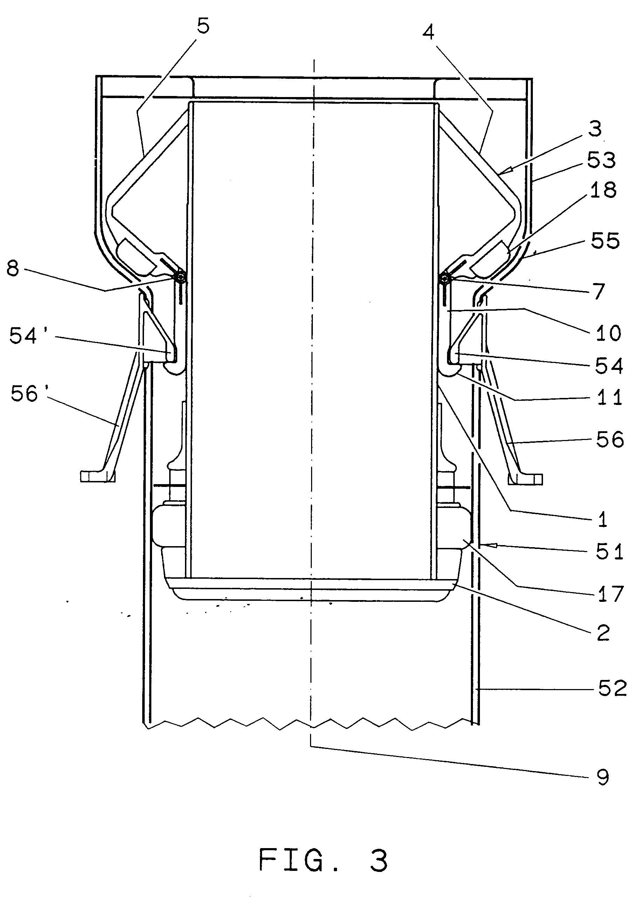

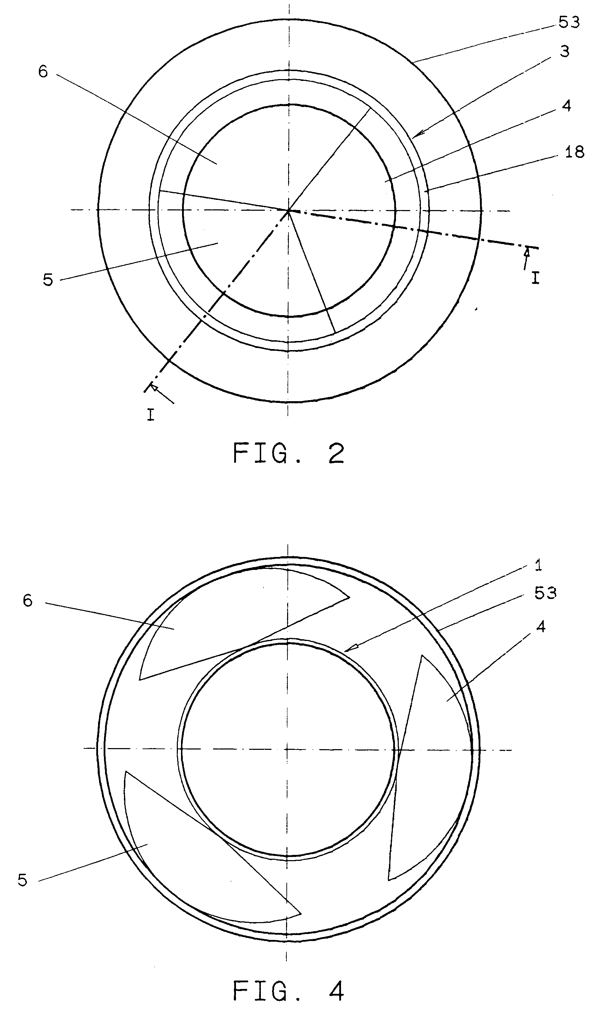

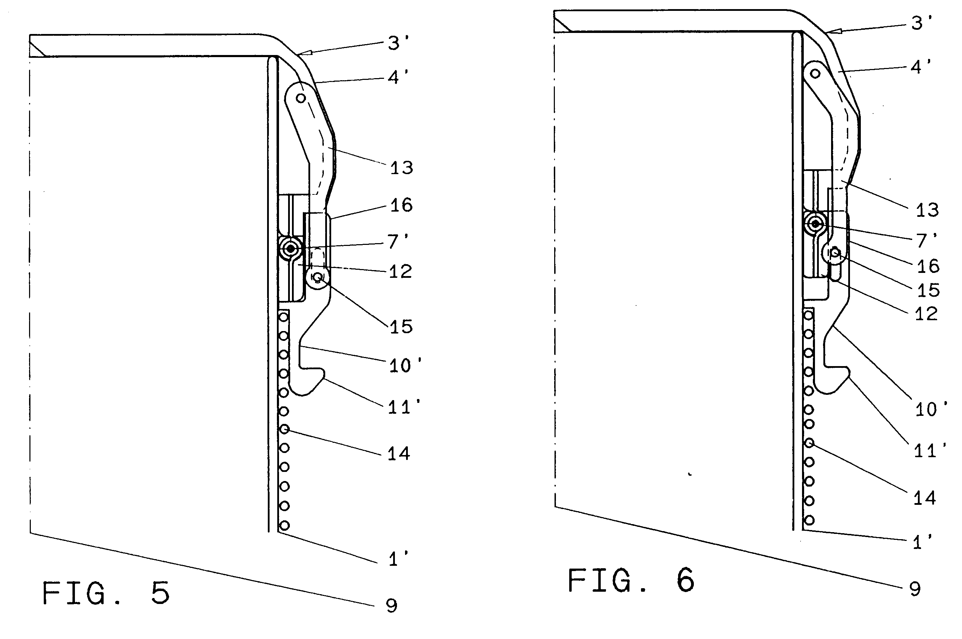

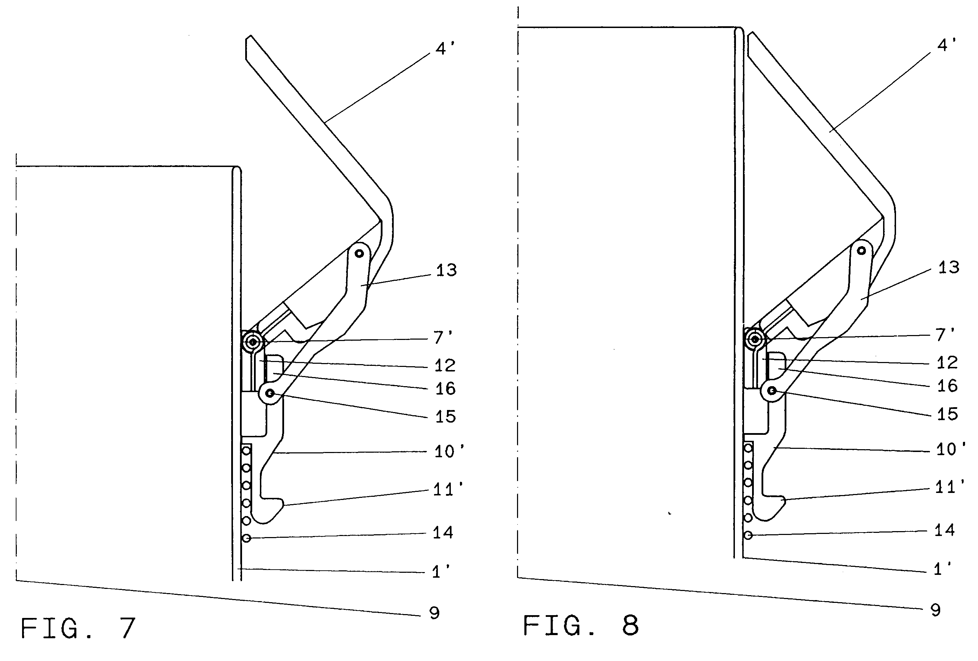

Anhand der beiliegenden Figuren wird die Erfindung näher erläutert. Es zeigt: Fig. 1 einen Schnitt durch ein erfindungsgemäßes Laderohr mit einer erfindungsgemäßen Hülse in Geschlossenstellung, und zwar entlang der Linie I-I von Fig. 2; Fig. 2 dasselbe in Draufsicht; Fig. 3 einen Schnitt analog zu Fig. 1, jedoch mit der Hülse in der Öffnungsstellung; Fig. 4 dasselbe in Draufsicht, Fig. 5 einen Schnitt durch den oberen Teil einer anderen Ausführungsform einer erfindungsgemäßen Hülse, wobei sich der Deckel in geschlossener und verriegelter Stellung befindet; Fig. 6 dasselbe, wobei sich der Deckel in geschlossener, aber entriegelter Stellung befindet; Fig. 7 dasselbe, wobei sich der Deckel in teilweise geöffneter Stellung befindet; und Fig. 8 dasselbe, wobei der Deckel vollständig geöffnet ist.

In den Fig. 1 bis 4 ist eine Hülse 1 in einem Laderohr 51 zu sehen. Die Hülse 1 weist - wie üblich - einen Boden 2 und einen Deckel 3 auf; am Boden 2 ist ein Dichtring 17 und am Deckel 3 ist ein Dichtring 18 angebracht. Wenn sich die Hülse 1 in einem Fahrrohr der Rohrpostanlage befindet, liegen die Dichtringe 17, 18 dicht am Fahrrohr an, sodaß die Hülse 1 am Fahrrohr geführt wird und durch eine Druckdifferenz im Fahrrohr transportiert werden kann.

Der Deckel 3 ist aus drei Deckelsektoren 4 bis 6 zusammengesetzt. Auch der Dichtring 18 besteht demgemäß aus drei Teilen, wobei jeder Deckelsektor 4 bis 6 einen entsprechenden Teil des Dichtringes 18 trägt. Alternativ dazu kann der Dichtring 18 auch direkt auf der Hülse 1 angebracht sein. Jeder der Deckelsektoren 4 bis 6 ist mittels einer Drehachse 7, 8 an einem Betätigungsring 10 schwenkbar gelagert. (Wenn der Dichtring 18 direkt auf der Hülse 1 angebracht ist, muß er kleine Unterbrechungen aufweisen, um Platz für die Verbindungselemente zwischen Deckelsektoren 4 bis 6 und den Drehachsen 7, 8 zu schaffen.) Der Betätigungsring 10 ist um die Hülse 1 herum angeordnet und läßt sich in Richtung der Hülsenlängsachse 9 verschieben. Daher befindet sich auch die Drehachsen 7, 8 knapp außerhalb der Hülse 1. Sie verlaufen außerdem normal zur Hülsenlängsachse 9 und tangential zur Hülse 1. Die Deckelsektoren 4 bis 6 lassen sich daher um die Drehachse 7, 8 in eine Öffnungsstellung schwenken, und durch eine Verschiebung des Betätigungsringes 10 können sie außen an der Hülse 1 vorbeigleiten (siehe Fig. 3).

Das Laderohr 51 weist einen erweiterten Teil 53 und einen nichterweiterten Teil 52 auf. Die dazwischenliegende Erweiterung ist mit 55 bezeichnet. Im nichterweiterten Teil 52 ragen Greifer 54, 54' in das Laderohr 51. Diese Greifer 54, 54' sind einstückig mit Halterungen 56, 56' ausgebildet, die außerhalb des Laderohres 51 befestigt sind. Die Greifer 54, 54' samt den Halterungen 56, 56' sind aus elastischem Kunststoffmaterial gefertigt. Daher lassen sich die Halterungen 56, 56' samt den Greifern 54, 54' nach außen drücken; außerdem lassen sich die Greifer 54, 54' um ihren Befestigungspunkt an den Halterungen 56, 56' in Richtung zu den Halterungen 56, 56' drücken, wobei die Materialstärken so gewählt sind, daß dazu eine relativ geringe Kraft ausreicht. Die Greifer 54, 54' können mit einem Vorsprung 11 des Betätigungsringes 10 in Anschlag kommen. Sie halten diesen zurück, wenn die Hülse 1 nach oben bewegt wird.

Die erfindungsgemäße Hülse 1 funktioniert im Zusammenwirken mit dem erfindungsgemäßen Laderohr 51 wie folgt: Wie bei Rohrpoststationen allgemein üblich, wird - wenn eine Hülse 1 erwartet wird - an das Ende des Fahrrohres ein verschiebbarer Rohrabschnitt gebracht. Die ankommende Hülse 1 wird in diesem verschiebbaren Rohrabschnitt z.B. durch einen Luftpolster abgebremst. Nachdem die Hülse 1 zum Stillstand gekommen ist, wird der Rohrabschnitt zum Laderohr 51 verfahren und schließt dort an den nicht erweiterten Teil 52 an. Nun wird die Hülse 1 mittels Druckluft, mittels Riemenantriebs oder mittels eines Stempels in das Laderohr 51 gehoben. Dies geschieht alles so, wie es bereits Stand der Technik ist.

Während des Anhebens der Hülse 1 im Laderohr 51 kommt zunächst der Deckel 3 mit den Greifern 54, 54' in Berührung. Da der Durchmesser des Deckels 3 von der Stelle weg, wo der Deckel 3 die Greifer 54, 54' das erste Mal berührt, bis zu seinem Maximalwert kontinuierlich, d.h. also nicht sprunghaft zunimmt, werden die Halterungen 56, 56' und somit auch die Greifer 54, 54' nach außen gedrückt, während die Hülse 1 weiter hochgehoben wird. Selbstverständlich darf auch der Dichtring 18 nicht rechtwinkelig zur Hülsenlängsachse 9 vorspringen, damit die Greifer 54, 54' auch am Dichtring 18 vorbeikommen können. Hinter dem Dichtring 18 verringert sich der Durchmesser wieder, bis er den Wert des Außendurchmessers des Betätigungsringes 10 erreicht. Infolge der federnden Ausführung der Halterungen 56, 56' werden die Greifer 54, 54' wieder in das Innere des Laderohres gedrückt, sodaß sie am Betätigungsring 10 anliegen. Wird nun die Hülse 1 noch weiter angehoben, gelangt sie in die in Fig. 1 dargestellte Stellung. Hier liegen die Greifer 54, 54' am Vorsprung 11 des Betätigungsringes 10 an. Da dieser Vorsprung 11 normal zur Hülsenlängsachse 9 vorspringt, tritt keine Kraftkomponente auf, die die Greifer 54, 54' nach außen drücken könnte; daher kann sich der Vorsprung 11 nicht an den Greifern 54, 54' vorbeibewegen, und der Betätigungsring 10 wird in der in Fig. 1 gezeigten Stellung festgehalten. Wird nun die Hülse 1 noch weiter nach oben gefördert, öffnet sich automatisch der Deckel 3, weil der Rand der Hülse 1 die Deckelsektoren 4 bis 6 um die Drehachsen 7, 8 nach außen drückt. Im dargestellten Ausführungsbeispiel verläuft der Bereich der Innenseite des Deckels 3, der am Rand der Hülse 1 anliegt, normal zur Hülsenlängsachse 9; da die Drehachsen 7, 8 nur knapp außerhalb der Hülse 1 liegen, ist die nach außen wirkende Kraftkomponente relativ gering und - je nach Reibungskoeffizient - unter Umständen nicht ausreichend, um die Reibung zwischen den Deckelsektoren 4 bis 6 und dem Rand der Hülse 1 zu überwinden. Aus diesem Grund ist es zweckmäßig, wenn bei den Drehachsen 7,8 jeweils eine Feder vorgesehen ist, die die Deckelsektoren 4 bis 6 nach außen vorspannt. Auf diese Weise wird die nach außen wirkende Kraftkomponente erhöht. Alternativ dazu wäre es aber natürlich auch möglich, den Deckel 3 z.B. halbkugelförmig auszubilden. Während die Hülse 1 weiter nach oben geschoben wird und der Betätigungsring 10 festgehalten wird, führen die Deckelsektoren 4 bis 6 eine Schwenkbewegung nach außen durch, wobei gleichzeitig die Drehachsen 7, 8 bezüglich der Hülse 1 nach unten wandern, sodaß in der Öffnungstellung (siehe Fig. 3 und 4) die Deckelsektoren 4 bis 6 seitlich neben der Hülse 1 liegen. Auf diese Weise ist der Inhalt der Hülse 1 leicht zugänglich.

Es ist natürlich möglich, das Laderohr 51 mit dem erweiterten Teil 53 nach unten anzuordnen, sodaß dann auch der Deckel 3 der Hülse 1 unten liegt. In diesem Fall fällt der Inhalt der Hülse 1 automatisch heraus, z.B. auf ein Förderband, wenn die Hülse 1 in die Öffnungsstellung gelangt.

Wenn die Hülse abgeschickt werden soll, ist es lediglich notwendig, sie im Laderohr abzusenken (wenn sich der erweiterte Teil 53 oben befindet), weil die Deckelsektoren 4 bis 6 automatisch geschlossen werden, wenn sie, ausgehend von der Erweiterung 55, in den nicht erweiterten Teil 52 des Laderohres 51 gezogen werden. Unmittelbar danach muß die breiteste Stelle des Deckels 3, also der Dichtring 18, an den Greifern 54, 54' vorbeigelangen, was aber mit relativ geringem Kraftaufwand möglich ist, weil sich die Greifer 54, 54' leicht um ihre Befestigungsstelle an den Halterungen 56, 56' in Richtung zu diesen biegen lassen. Auf diese Weise kann die Hülse 1 mit relativ geringem Kraftaufwand - meist wird das eigene Gewicht genügen - wieder nach unten in das verschiebbare Rohr gelangen. Dieses verschiebbare Rohr wird dann zum Fahrrohr verschoben, wonach die Hülse wieder in die Rohrpostanlage gelangt.

Die soeben beschriebene Ausführungsform ist sehr einfach im Aufbau. Wenn die Deckelsektoren 4 bis 6 um ihre Drehachsen 7, 8 nach außen vorgespannt sind, dann ist diese Hülse selbstöffnend, sodaß in diesem Fall sogar die Greifer 54, 54' und der Vorsprung 11 entbehrlich sind.

Im folgenden wird anhand der Fig. 5 bis 8 eine zweite Ausführungsform einer erfindungsgemäßen Hülse 1' erläutert, die selbstschließend ist und bei der der Deckel 3' in der Geschlossenstellung automatisch verriegelt.

Auch bei dieser Ausführungsform hat die Hülse 1' einen Deckel 3', der aus drei Deckelsektoren gebildet ist. (In den Fig. 5 bis 8 ist allerdings immer nur ein Deckelsektor 4' zu sehen.) Der Deckelsektor 4' ist um eine Drehachse 7' an einem Lagerring 12 gelagert. Dieser Lagerring 12 ist parallel zur Hülsenlängsachse 9 entlang der Hülse 1' verschiebbar. Unterhalb des Lagerringes 12 ist ein Betätigungsring 10' vorgesehen, der - analog wie der Betätigungsring 10 - einen Vorsprung 11' hat. Zusätzlich hat der Betätigungsring 10' noch einen Fortsatz 16, mit dem er in der Geschlossenstellung (siehe Fig. 5) den unteren Rand der Deckelsektoren 4' umfaßt. Der Betätigungsring 10' ist durch eine Feder 14 nach oben vorgespannt. Die Feder 14 ist als spiralförmige Druckfeder ausgebildet und um die Hülse 1' herum angeordnet.

An den Deckelsektoren 4' sind Kipphebel 13 mit einem Ende angelenkt; ihr anderes Ende ist am Betätigungsring 10' angelenkt, wobei jedoch der Anlenkpunkt 15 parallel zur Hülsenlängsachse 9 verschiebbar ist.

Das Öffnen der Hülse 1' geschieht folgendermaßen: In der in Fig. 5 gezeigten Stellung ist der Deckel 3' verriegelt, weil der untere Rand der Deckelsektoren 4' vom Fortsatz 16 umgriffen ist. Wird nun der Betätigungsring 10' nach unten verschoben (was - analog wie dies anhand der Figuren 1 bis 4 beschrieben wurde - durch entsprechende Greifer im Laderohr erfolgt), wird der Fortsatz 16 soweit nach unten verschoben, daß er unterhalb des unteren Rand der Deckelsektoren 4' zu liegen kommt (siehe Fig. 6). Dadurch ist der Deckel 3' entriegelt. Zieht man den Betätigungsring 10' noch weiter nach unten, so werden vom Betätigungsring 10 ' die Anlenkpunkte 15 der Kipphebel 13 nach unten mitgenommen. Dadurch werden die Deckelsektoren 4' um die Drehachsen 7' nach außen verschwenkt, bis sie die in Fig. 7 gezeigte Stellung einnehmen. Falls dabei die Reibung nicht überwunden werden kann, müssen auch hier die Deckelsektoren 4' um ihre Drehachsen 7' durch eine Feder nach außen vorgespannt werden. Zieht man den Betätigungsring 10' noch weiter nach unten, so werden die Deckelsektoren 4' nun außen an der Hülse 1' vorbei nach unten gezogen, bis die Öffnung der Hülse 1' vollkommen frei ist (siehe Fig. 8).

Wenn der Betätigungsring 10' freigegeben wird (z.B. indem man die Hülse 1' aus dem Laderohr entnimmt), wird er durch die Feder 14 nach oben gedrückt. Dabei kommt der Fortsatz 16 am unteren Rand der Deckelsektoren 4' zu liegen, sodaß die Deckelsektoren 4' zunächst nach oben gedrückt werden und später auch in die Geschlossenstellung verschwenkt werden. Bei der Schließbewegung sind die Kipphebel 13 außer Funktion, weil sich ihr Anlenkpunkt 15 bezüglich des Betätigungsringes 10' nach unten verschieben läßt. Schließlich wird die in Fig. 5 gezeigte Stellung erreicht, wo der Deckel geschlossen und verriegelt ist.

Derselbe Vorgang findet statt, wenn die Hülse 1' im Laderohr nach unten abgesenkt wird, weil auch in diesem Fall der Betätigungsring 10' freigegeben wird.

## Patentansprüche

1. Hülse (1; 1') für eine Rohrpostanlage, die durch einen Boden (2) und einen Deckel (3; 3') verschließbar ist, wobei der Deckel (3; 3') aus mehreren Deckelsektoren (4, 5, 6; 4') gebildet ist und jeder dieser Deckelsektoren (4, 5, 6; 4') um eine eigene, jeweils tangential zur Hülse (1; 1') und normal zur Hülsenlängsachse (9) liegende Drehachse (7, 8; 7') schwenkbar gelagert ist und wobei ein Betätigungsring (10; 10') parallel zur Hülsenlängsachse verschiebbar um die Hülse (1; 1') herum angeordnet ist, **dadurch gekennzeichnet,** daß jede Drehachse (7, 8; 7') in geometrischer Hinsicht außerhalb der Hülse (1; 1') liegt und mittels des vorzugsweise einen nach außen ragenden Vorsprung (11; 11') aufweisenden Betätigungsringes (10; 10') parallel zur Hülsenlängsachse (9) verschiebbar ist und daß in Schließstellung des Deckels (3, 3') der Außendurchmesser des Deckels (3, 3') in Richtung Boden von einem ersten Wert bis zu einem Maximalwert kontinuierlich zunimmt.

2. Hülse nach Anspruch 1, **dadurch gekennzeichnet,** daß die Drehachsen (7, 8) direkt auf dem Betätigungsring (10) befestigt sind.

3. Hülse nach Anspruch 1, **dadurch gekennzeichnet,** daß die Drehachsen (7') auf einem Lagerring (12) befestigt sind, der um die Hülse (1') herum angeordnet ist, und daß der Betätigungsring (10') mit jedem Deckelsektor (4') über Kipphebel (13) verbunden ist, wobei jeder Kipphebel (13) mit einem Ende am jeweiligen Deckelsektor (4') und mit dem anderen Ende am Betätigungsring (10') angelenkt ist.

4. Hülse nach Anspruch 3, **dadurch gekennzeichnet,** daß der Betätigungsring (10') in Richtung Deckel (3') durch eine Feder (14) vorgespannt ist.

5. Hülse nach Anspruch 3 oder 4, wobei der Betätigungsring (10') einen Fortsatz (16) aufweist, mit dem er - wenn er sich in der nächstmöglichen Lage zum Deckel (3') befindet - die Deckelsektoren (4') teilweise umgreift, **dadurch gekennzeichnet,** daß der Anlenkpunkt (15) jedes Kipphebels (13) am Betätigungsring (10') in Richtung der Hülsenlängsachse (9) verschiebbar ist.

6. Hülse nach einem der Ansprüche 1 bis 5, **dadurch gekennzeichnet,** daß die Deckelsektoren (4, 5, 6; 4') um ihre Drehachse (7, 8; 7') nach außen vorgespannt sind.

7. Hülse nach einem der Ansprüche 1 bis 6, **dadurch gekennzeichnet,** daß drei Deckelsektoren (4, 5, 6; 4') vorgesehen sind.

8. Hülse nach einem der Ansprüche 1 bis 7, **dadurch gekennzeichnet,** daß bei geöffnetem Deckel (3; 3') die Deckelsektoren (4, 5, 6; 4') von der Hülse axial überragt werden.

9. Laderohr (51) für eine Rohrpoststation für eine Hülse (1; 1') nach einem der Ansprüche 1 bis 8, **dadurch gekennzeichnet,** daß sich das Laderohr (51) in Richtung offenes Ende erweitert und daß in den nicht erweiterten Teil (52) des Laderohres (51) seitlich Greifer (54, 54') für den Betätigungsring ragen, wobei die Greifer (54) durch den Deckel (3, 3') der Hülse (1, 1') gegen Federkraft nach außen drückbar sind.

## Claims

1. A case (1; 1') for a pneumatic mail installation, which is able to be closed by a base (2) and a cover (3; 3'), in which the cover (3; 3') is formed from several cover sectors (4, 5, 6; 4') and each of these cover sectors (4, 5, 6; 4') is mounted so as to be swivellable about its own rotational axis (7, 8; 7') lying in each case tangentially to the case (1; 1') and normal to the longitudinal axis (9) of the case, and in which an actuating ring (10; 10') is arranged so as to be displaceable parallel to the longitudinal axis of the case about the case (1; 1'), characterised in that each rotational axis (7, 8; 7') lies outside the case (1; 1') from a geometric point of view and is displaceable parallel to the longitudinal axis (9) of the case by means of the actuating ring (10; 10') which preferably has a projection (11; 11') projecting toward the exterior, and that, in the closed position of the cover (3, 3'), the external diameter of the cover (3, 3') increases continuously in the direction of the base from a first value up to a maximum value.

2. A case according to Claim 1, characterised in that the rotation axes (7, 8) are fastened directly on the actuating ring (10).

3. A case according to Claim 1, characterised in that the rotational axes (7') are fastened on a ring bearing (12), which is arranged around the case (1'), and that the actuating ring (10') is connected with each cover sector (4') by means of rocker arms (13), each rocker arm (13) being articulated by one end on the respective cover sector (4') and by the other end on the actuating ring (10').

4. A case according to Claim 3, characterised in that the actuating ring (10') is prestressed in the direction of the cover (3') by a spring (14).

5. A case according to Claim 3 or 4, in which the actuating ring (10') has an extension (16) by which - when it is in the closest possible position to the cover (3') - it partially embraces the cover sectors (4'), characterised in that the articulation point (15) of each rocker arm (13) is displaceable on the actuating ring (10') in the direction of the longitudinal axis (9) of the case.

6. A case according to any of Claims 1 to 5, characterised in that the cover sectors (4, 5, 6; 4') are prestressed toward the exterior about their rotational axis (7, 8; 7').

7. A case according to any of Claims 1 to 6, characterised in that three cover sectors (4, 5, 6; 4') are provided.

8. A case according to any of Claims 1 to 7, characterised in that, with the cover (3; 3') opened, the cover sectors (4, 5, 6; 4') have the case projecting over them axially.

9. A charging tube (51) for a pneumatic mail station for a case (1; 1') according to any of Claims 1 to 8, characterised in that the charging tube (51) widens in the direction of the open end and that grippers (54, 54') for the actuating ring project laterally into the non-widened part (62) of the charging tube (51), the grippers (54) being able to be pressed outwards contrary to the elastic force by means of the cover (3, 3') of the case (1, 1').

## Revendications

1. Douille (1 ; 1') pour une installation de poste pneumatique (pour expédition pneumatique) qui est susceptible d'êtré fermée au moyen d'un fond (2) et d'un couvercle (3 ; 3'), le couvercle (3 ; 3') étant constitué de plusieurs secteurs de couvercle (4, 5, 6 ; 4') et chacun de ces secteurs de couvercle (4, 5, 6 ; 4') étant monté de façon à pouvoir pivoter autour d'un axe de rotation (7, 8 ; 7') propre, situé chaque fois tangentiellement par rapport à la douille (1 ; 1') et perpendiculairement par rapport à l'axe longitudinal (9) de la douille, et une bague d'actionnement (10 ; 10') étant disposée autour de la douille (1 ; 1') de façon déplaçable parallèlement à l'axe longitudinal de la douille, caractérisé en ce que chaque axe de rotation (7, 8 ; 7'), du point de vue géométrique, est situé à l'extérieur de la douille (1 ; 1') et est déplaçable au moyen de la bague d'actionnement (10 ; 10') présentant de préférence une saillie (11 ; 11') se projetant vers l'extérieur, parallèlement à l'axe longitudinal (9) de la douille et en ce que, dans la position de fermeture du couvercle (3, 3'), le diamètre extérieur du couvercle (3, 3') dans la direction du fond augmente de façon continue, depuis une première valeur jusqu'à une valeur maximale.

2. Douille selon la revendication 1, caractérisée en ce que les axes de rotation (7, 8) sont fixés directement sur la bague d'actionnement (10).

3. Douille selon la revendication 1, caractérisée en ce que les axes de rotation (7') sont fixés sur une bague de palier (12) disposée autour de la douille (1') et en ce que la bague d'actionnement (10') est reliée à chaque secteur de couvercle (4') par l'intermédiaire de leviers basculants (13), chaque levier basculant (13) étant articulé, par une extrémité au secteur de couvercle (4') respectif et, par l'autre extrémité, à la bague d'actionnement (10').

4. Douille selon la revendication 3, caractérisée en ce que la bague d'actionnement (10') est précontrainte dans la direction du couvercle (3') au moyen d'un ressort (14).

5. Douille selon la revendication 3 ou 4, dans laquelle la bague d'actionnement (10') présente un prolongement (16) par lequel elle entoure partiellement les secteurs de couvercle (4') - lorsqu'elle se trouve dans la position la plus proche possible du couvercle (3') - caractérisée en ce que le point d'articulation (15) de chaque levier basculant (13) sur la bague d'actionnement (10') est déplaçable dans la direction de l'axe longitudinal de douille (9).

6. Douille selon l'une des revendications 1 à 5, caractérisée en ce que les secteurs de couvercle (4, 5, 6 ; 4') sont précontraints vers l'extérieur autour de leur axe de rotation (7, 8 ; 7').

7. Douille selon l'une des revendications 1 à 6, caractérisée en ce que trois secteurs de couvercle (4, 5, 6 ; 4') sont prévus.

8. Douille selon l'une des revendications 1 à 7, caractérisée en ce que, lorsque le couvercle (3 ; 3') est ouvert, les secteurs de couvercle (4, 5, 6 ; 4') dépassent axialement de la douille.

9. Tube de chargement (11) pour un station de poste pneumatique, pour une douille (1 ; 1') selon l'une des revendications 1 à 8, caractérisé en ce que le tube de chargement (51) s'élargit en direction de l'extrémité ouverte, et en ce que, dans la partie non élargie (52) du tube de chargement (51), pénètrent latéralement des organes d'accrochage (54, 54') de la bague d'actionnement, les organes d'accrochage (54) étant susceptibles d'être pressés vers l'extérieur à l'encontre d'une force élastique par le couvercle (3, 3') de la douille (1, 1').
